# EUROPEAN PATENT APPLICATION

(11) **EP 1 460 853 A1**
(43) Date of publication of application: **22.09.2004**
(21) Application number: 04251516.3
(22) Date of filing: 17.03.2004
(51) Int. Cl.: H04N 7/24

(54) **Transmission of data using a data carousel**

(30) Priority: 21.03.2003 GB 0306558
(71) Applicant: Nokia Corporation, 02150 Espoo (FI)
(72) Inventor: Kangas, Mauri, 21530 Paimio (FI); Ikonen, Ari, 21280 Raisio (FI)
(74) Representative: Read, Matthew Charles

(57) **Abstract**

A method of transmitting data, such as an MMS message 13, via a DVB network 4 comprises encapsulating the data 13, mapping the resulting data packet onto a transport packet 7, including filtering information 14 and/or payload scrambling control mode information 12 relating to scrambling of the data packet in the transport packet 7 and transmitting the transport packet 7 using a data carousel to one or more receiving devices STB1, STB2, MS3. The inclusion of filtering information 14 allows the use of hardware filters 18 for screening data via a data carousel at a receiving device STB1, while the inclusion of payload scrambling control mode information 12 allows any encryption of the transport packet 7 to be limited to the data packet, so that it is not necessary for the receiving device STB1, STB2, MS3 to decrypt the transport packet 7 before filtering. The filtering information 14 may be part or whole of an address associated with the receiving device STB1, e.g. an IP or MAC address.

## Description

The invention relates to the transmission and reception of data in a communication system and is particularly suitable for, but not limited to, Digital Video Broadcast (DVB) transmissions using satellite, cable or terrestrial networks.

Many of the data delivery mechanisms associated with digital broadcasting lend themselves to the provision of interactive services. The reliability of broadcast transmissions may be enhanced by using a session protocol that repeatedly broadcasts a set of data packets in order to ensure that they are received by one or more receivers.

One mechanism that can be used for repeated broadcasts is a DVB data carousel, as defined in European Telecommunications Standards Institute, European Standard (Telecommunications Series) EN 301 192, European Broadcasting Union, France 1999. The application data is encapsulated in a data packet, for example as a datagram section conforming to the Digital Storage Media Command and Control (DSM-CC) standard defined in International Organisation for Standardization ISO/IEC 13818-6, ISO Publications, Geneva, Switzerland, 1998 and mapped onto MPEG-2 transport packets according to ISO/IEC 13818-1, ISO Publications, Geneva, Switzerland, 2000. The transport packets are arranged into modules and blocks, forming groups of transport packets within the data carousel. The data carousel transmits the groups of transport packets cyclically, so that each group is periodically re-transmitted.

The receiver filters the incoming data to ensure that only messages intended for that receiver are made available for access by its user. Filtering may be implemented using software that continuously monitors the incoming transport stream. For example, the receiver may have a key assigned to it, which is used by an associated processor to decrypt all incoming messages. If the message is encrypted according to the key assigned to its intended receiver, the receiver can filter incoming data by disregarding any messages that it cannot successfully decrypt. In the case of data delivery using a data carousel mechanism, the message is encrypted by scrambling the transport packet. An MPEG-2 transport packet contains a field for indicating a scrambling control mode used so that the receiving device can decrypt it accordingly. However, this method places an additional strain on filtering mechanisms, as it is necessary to decrypt the entire transport packet before it can be determined whether or not the data is addressed to that receiver. For this reason, the filtering process can be quite slow, comparing unfavourably with hardware based filtering methods used in other broadcasting systems.

According to a first aspect of the invention, a method of transmitting data in a digital broadband communication network comprises encapsulating the data according to a first protocol to produce a data packet, mapping the data packet onto a transport packet, encoding filtering information in a filtering field included in the transport packet and repeatedly transmitting the transport packet using a data carousel mechanism.

This aspect also provides a computer program containing program instructions for configuring a processor to perform such a method.

This method of transmitting data allows the use of hardware based filtering methods in a receiving device for screening data received from a data carousel for example a DVB carousel. As such methods are do not require continuous processing and monitoring of incoming data, they are generally faster than those using software based filters. Therefore, the invention can potentially increase the efficiency of data reception in a receiving device.

Where the filtering information relates to an address of a recipient, it may be the whole or part of an individual or group address. The address may be in the form of an IP or Media Access Control (MAC) address.

Information indicating a payload scrambling control mode may also be included in the transport packet. In particular, where data is encapsulated according to the DSM-CC datagram section format defined in ISO/IEC 13818-6, the resulting data packet includes two reserved bits. When the data packet is mapped onto the transport packet, the payload scrambling mode may be indicated using these two bits.

The location of the filtering information and optional payload scrambling control mode information within the structure of the transport packet is not important. However, it is advantageous for such information to be located at positions equivalent to those in transport packets carrying data encapsulated according to other protocols, so that the filtering processes performed by a receiving device may be compatible with two or more types of data packet. For example, the position of the filtering information and/or the optional payload scrambling information may match those in a transport packet carrying a Digital Video Broadcast Multiprotocol Encapsulation (DVB-MPE) data packet as defined in ISO/IEC 13818-6, the filtering information in this case being a 4 byte MAC address and located immediately before a DSM-CC Download Data Header.

According to a second aspect of the invention, an apparatus comprises data handling means configured to receive data from a source, encapsulate the data to produce a data packet according to a first protocol, map the data packet onto a transport packet, encode filtering information in a filtering field included in the transport packet and repeatedly transmit the transport packet using a data carousel mechanism.

This aspect further provides a communication system comprising such an apparatus, along with a DVB network and one or more receiving devices.

According to a third aspect of the invention, a transport packet comprises a header containing an identifier corresponding to a data carousel mechanism, a payload comprising data to be transmitted to one or more users of one or more receiving devices and a filtering field containing filtering information relating to said one or more receiving devices.

According to a fourth aspect of the invention, a method of transmitting data in a digital broadband communication network comprises encapsulating the data according to a first protocol to produce a data packet, mapping the data packet onto a transport packet, incorporating within the transport packet payload scrambling control mode information relating to an encryption status of the data packet mapped onto said transport packet and repeatedly transmitting the transport packet using a data carousel mechanism.

This aspect also provides a computer program containing program instructions for configuring a processor to perform such a method.

This aspect of the invention allows encryption to be limited to a payload delivered using a data carousel mechanism, i.e. without scrambling the transport packet itself. As the filtering information is not scrambled, it is not necessary to perform a decryption process before filtering. This potentially increases the speed of the filtering process and allows the use of hardware filters for screening data transmitted using a data carousel mechanism. This may also increase the efficiency of the data reception process, as the receiving device only decrypts information intended for its user.

The DSM-CC datagram section format defined in ISO/IEC 13818-6 includes two reserved bits. The invention can be implemented so that, if the data packet is mapped onto the transport packet has been configured in accordance with this format, these reserved bits are used to indicate the scrambling control mode.

Alternatively, the scrambling control information may be located at a position in the transport packet corresponding to the location of the equivalent information in a transport packet carrying a payload encapsulated according to another protocol, such as DVB-MPE.

The payload scrambling control mode may be indicated using a format in which a first bit is used to indicate whether or not the data packet is scrambled. Where the data packet has been scrambled, a second bit may be used to indicate an encryption key that has been used.

According to a fifth aspect of the invention, an apparatus comprises data handling means configured to receive data from a source, encapsulate the data according to a first protocol to produce a data packet, map the data packet onto a transport packet, incorporate within the transport packet payload scrambling control mode information relating to an encryption status of the data packet mapped onto said transport packet and repeatedly transmit the transport packet using a data carousel mechanism.

This aspect further provides a communication system comprising such an apparatus, along with a DVB network and one or more receiving devices.

According to a sixth aspect of the invention, a transport packet comprises a header containing an identifier relating to a DVB data carousel, a payload comprising data to be transmitted to one or more users of one or more receiving devices and a payload scrambling control mode field containing scrambling control mode information, said scrambling control mode information being unrelated to an encryption status of said header.

An embodiment of the invention will now be described, with reference to the accompanying drawings, in which:
Figure 1 depicts a communication system comprising a DVB data carousel;
Figure 2 depicts a transport stream packet according to a first embodiment of the present invention alongside a known transport stream packet in which data has been encoded according to a different protocol;
Figure 3 is a block diagram of a set top box in the communication system of Figure 1; and
Figure 4 is a block diagram of a mobile terminal in the communication system of Figure 1.

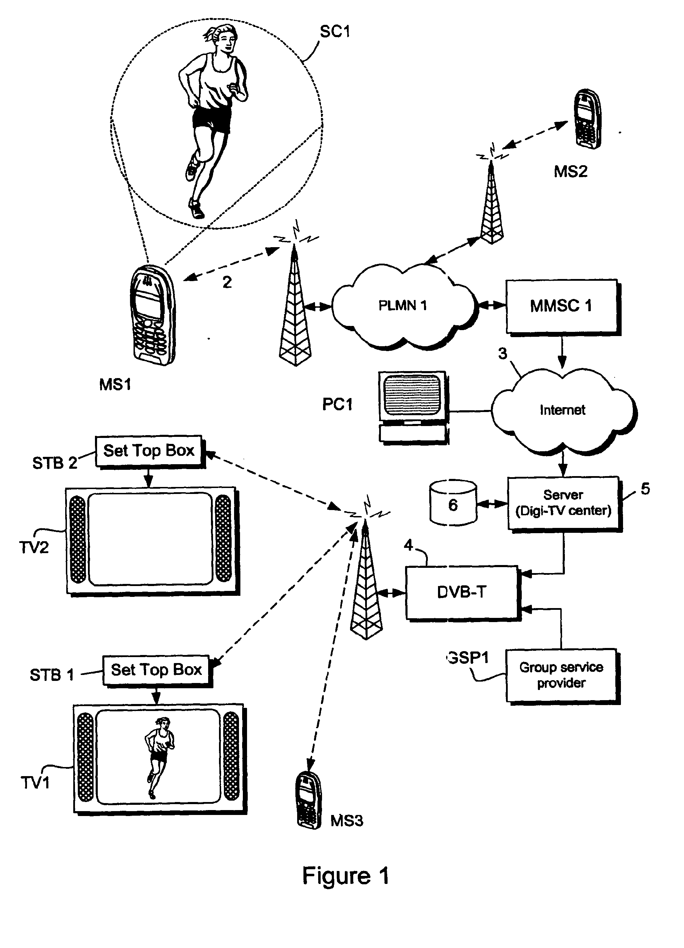

Referring to Figure 1, a mobile cellular telephone handset MS1 is in radio communication with a public land mobile network PLMN1 through a cellular radio link 2. In this example, the handset MS1 includes a digital camera that can take a photograph of scene SC1 - a girl running. The handset MS1 includes digital processing circuitry that converts the image from the camera into a Multimedia Messaging Service (MMS) message for transmission to an individual recipient or a group of recipients in a manner well known *per se.* For example, the Nokia^{(RTM)} 7650 telephone handset can perform this function. In addition to taking photographs the handset MS1 may be used for taking video clips including audio signals. Such video clips may also be sent as MMS messages. The MMS message may be transmitted under the control of MMSC1 through PLMN1 to another handset MS2. Alternatively, a user of handset MS1 can associate a TCP/IP address with the MMS, so that the MMSC1 can forward the MMS image data to an IP address via the Internet 3, in the form of an email attachment. In this example, the MMS message may be routed to a personal computer PC1 connected to the Internet 3.

The MMS message may also be routed selectively via a DVB-T network 4 to one or more receiving devices, such as set top boxes STB1, STB2, for display on associated analogue TV receivers TV1, TV2, and/or to one or more mobile terminals MS3 equipped with DVB signal reception capabilities. To this end, the MMS message is routed to a Digi-TV centre that provides services through the DVB-T network 4. The Digi-TV centre comprises a server 5 for MMS messages, which includes a data carousel for repeated data transmissions, and has a store 6 to receive messages from the Internet 3.

The MMS image data is encapsulated in a data packet according to the DSM-CC datagram section format, according to the syntax shown in Table 1.

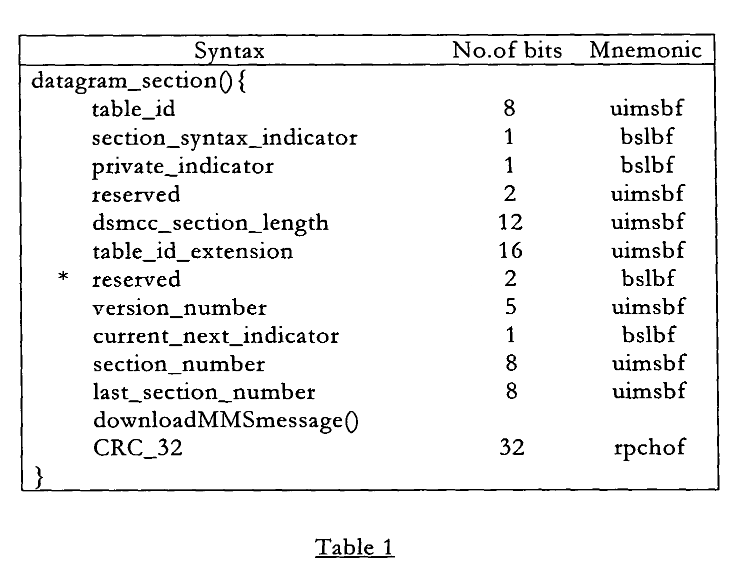

The datagram section format includes a table_id, which depends on the type of message or data being encapsulated. In this case, the data is an MMS message and so the table_id has a value indicating that the datagram is a MMS message to be downloaded. The datagram section format also includes two reserved bits, indicated with an asterisk in Table 1.

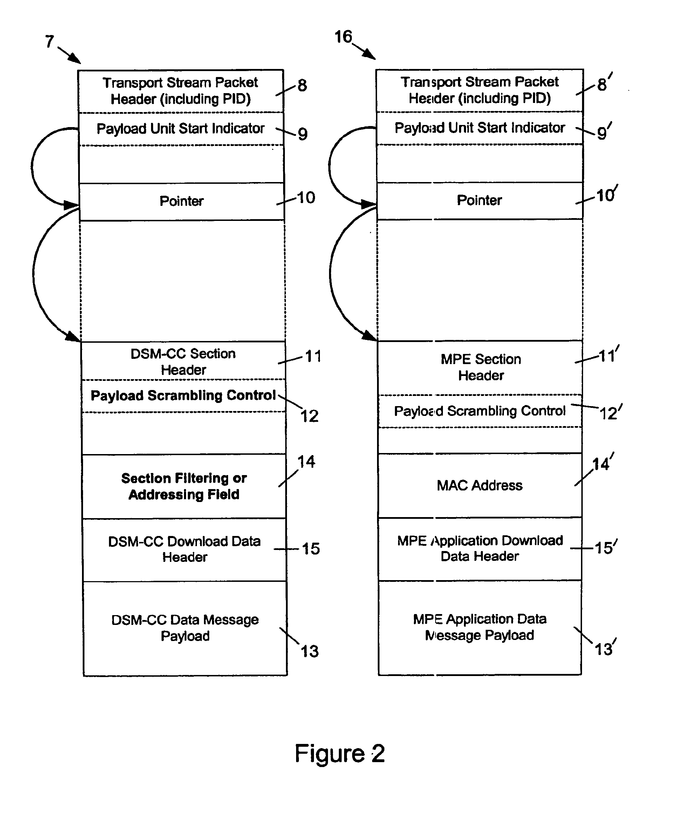

The data packet may be scrambled, if required, before being mapped onto an MPEG-2 transport packet 7, as shown in Figure 2. The structure and syntax of the MPEG-2 transport packet 7 is shown in more detail in Table 2.

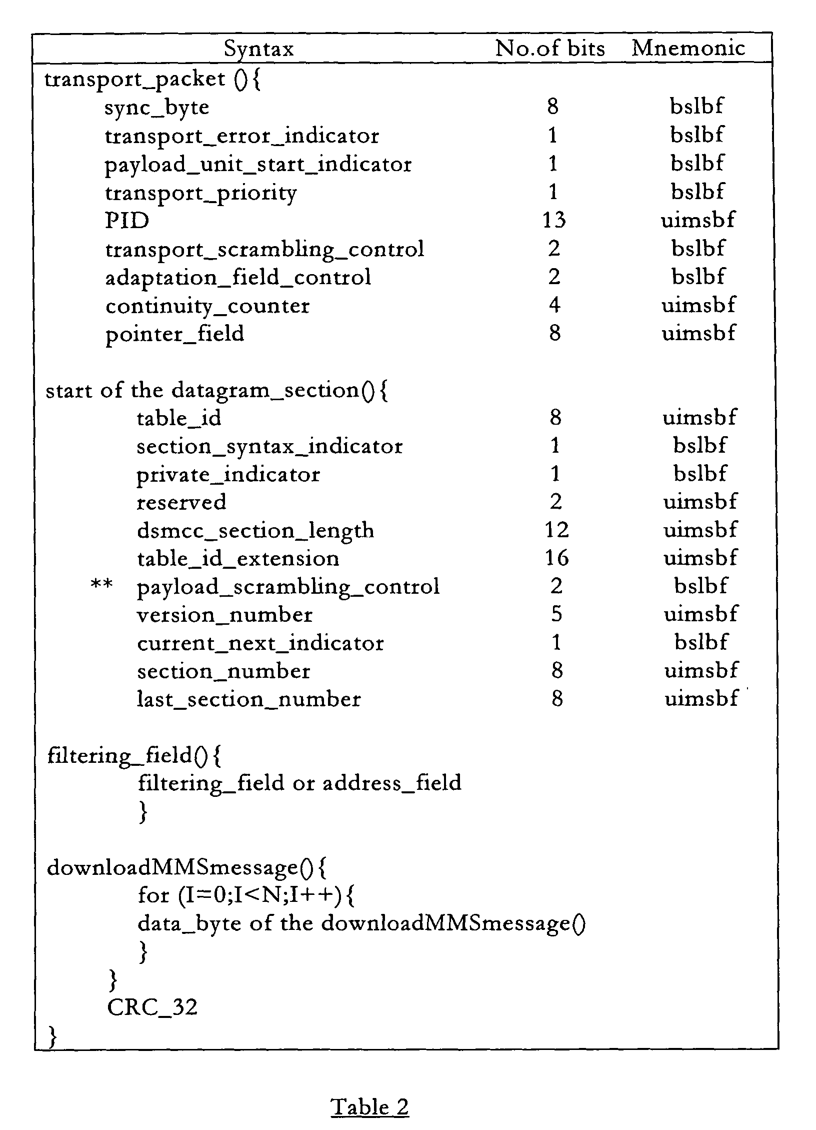

The transport packet contains a header 8, which includes a packet identifier (PID) associated with the data carousel, a bit 9 indicating the start of the payload unit and an 8-bit pointer 10, which points to a header 11 of the datagram.

Within the transport packet 7, the reserved bits from the original datagram, indicated by an asterisk in Table 1, are replaced with payload scrambling control bits (hereafter, PSCBs) 12, indicated by two asterisks in Table 2. These PSCBs represent the scrambling control mode of the payload, i.e. the datagram, as shown in Table 3.

**Table 3**

| Payload scrambling control bits | Scrambling mode |
|---|---|
| 00 | Encrypted using session key 1 |
| 01 | Encrypted using session key 0 |
| 10 | Reserved |
| 11 | Unscrambled |

In this example, if the first payload scrambling control bit is a '1', this indicates that the data has not been scrambled. However, where the first control bit is a '0', the second control bit indicates the scrambling control mode used.

The transport packet further includes a 32-bit field for filtering information 14, a header 15 associated with the MMS and the datagram 13 itself. The filtering information 14 is used by a receiving device, e.g. set top box STB1 or mobile terminal MS3, to determine whether or not received data is addressed to it, so that data that is not intended for a user of that receiving device can be discarded. In this particular embodiment, the filtering information 14 is in the form of a MAC address of an individual receiving device STB1, mobile terminal MS3 or group of receiving devices, to which the MMS is directed. However, it is possible to use part of the MAC address or part or all of an IP address associated with a receiving device or group, depending on the broadcaster's requirements.

In this example, the location of the filtering information 14 in the DSM-CC datagram 13 corresponds to the location of the filtering information in an equivalent DVB-MPE datagram, although the location of the PSCMBs 12 differs. This is shown in Table 4, which compares the syntaces of these two formats.

**Table 4**

| | | |
|---|---|---|
| DSM-CC datagram section | DVB-MPE datagram section | No.of bits |
| table_id | table_id | 8 |
| section_syntax_indicator | section_syntax_indicator | 1 |
| private_indicator | private_indicator | 1 |
| reserved | reserved | 2 |
| dsmcc_section_length | section_length | 12 |
| table_id_extension | MAC_address_6 | 8 |
| table_id_extension | MAC_address_5 | 8 |
| payload_scrambling_control | reserved | 2 |
| version_number (bit4, bit3) | payload_scrambling_control | 2 |
| version_number (bit2, bit1) | address_scrambling_control | 2 |
| version_number (bit0) | LLC_snap_flag | 1 |
| current_next_indicator | current_next_indicator | 8 |
| section_number | section_number | 8 |
| Address/ Filtering Field | MAC_address_3 | 8 |
| Address/ Filtering Field | MAC_address_2 | 8 |
| Address/ Filtering Field | MAC_address_1 | 8 |
| Address/ Filtering Field | MAC_address_0 | 8 |

Figure 2 shows a transport packet 16 containing fields 8' - 15', which contains the same MMS 13 as the transport packet 7 as an DVB-MPE encapsulated datagram 13'. The filtering information 14 in the transport packet 7 are located at the same position as the equivalent data 14' in a transport packet 16 in the form of the MAC address of the receiving device. This means that a software or hardware filter can screen both transport packets 7, 16 without requiring any modification relating to the different protocols used to encapsulate the MMS.

In addition, as the payload is scrambled independently of the transport packet 7, it is not necessary to unscramble the filtering information at this stage. Therefore, even where a software filter is used, the filtering process may proceed quickly and efficiently when compared with previous software filters for screening data transmitted using a data carousel mechanism.

In an alternative embodiment, the PSCMBs 12 are located at a position corresponding to the payload scrambling control information 12' in a transport packet carrying a DVB-MPE datagram, in order to further increase interoperability of filtering and unscrambling procedures in the receiving device such as the set top box STB1 or a mobile terminal. This can be achieved by departing from the DSM-CC datagram section format as follows. Table 5 compares the syntaces of this alternative datagram section format and the DVB-MPE datagram section format.

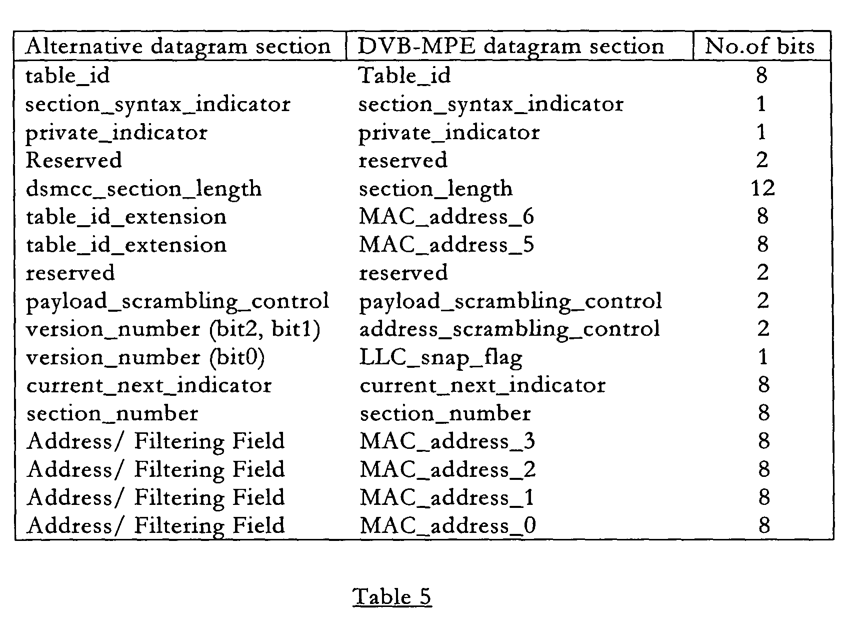

In this embodiment, the version number is encoded using three bits (bit0, bit1, bit2). The payload scrambling control bits 12 are encoded in two bits in a location corresponding to that of bit4 and bit3 of the version number as defined in the DSM-CC datagram_section format shown in Table 4. As shown in Table 5, both the PSCBs 12, 12' and the filtering information 14, 14' are located at the same position within the transport packets 7, 16.

The server 5 then groups related transport packets together and broadcasts the group or groups to individual receiving terminals, e.g. set top boxes STB1, STB2, mobile terminal MS3, via the DVB-T network 4. In accordance with the data carousel mechanism, the broadcast of the group of transport packets is repeated at regular intervals. The re-transmission of transport packets continues until the group of transport packets replaced by new data or the data carousel is taken offline.

The set top box STB1 is connected to a conventional analogue TV receiver TV1. It will be understood that the DVB-T network 4 broadcasts data to many television receivers illustrated schematically by a further television receiver TV2 associated with a second set top box STB2. The set top boxes STB1, STB2 may also receive group services from a group service provider GSP1 through the DVB-T network 4.

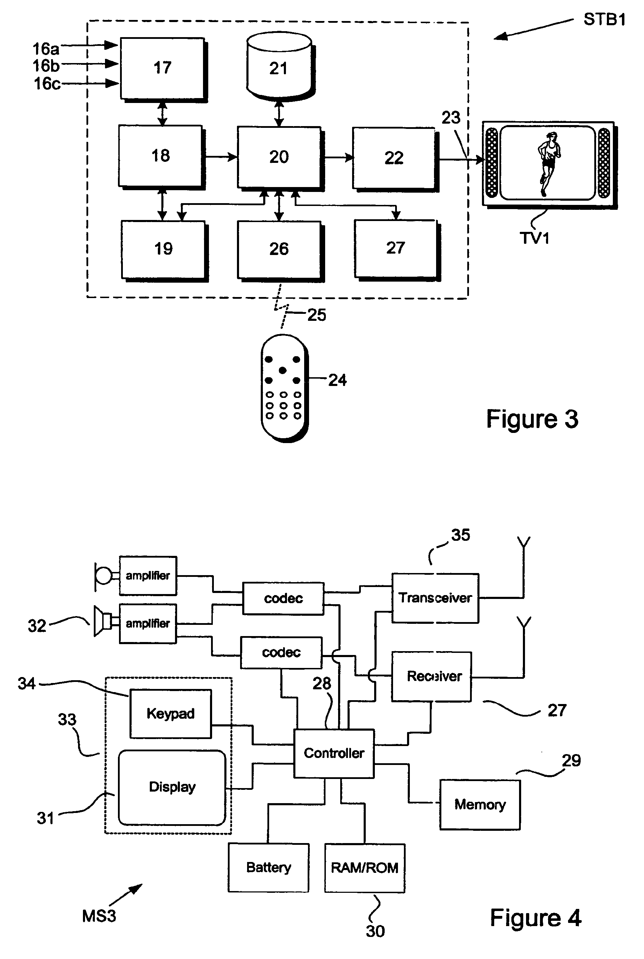

The set top box STB1 is shown in more detail in Figure 3. Digital data from cable, satellite and terrestrial DVB networks are received on inputs 16a, 16b, 16c and are fed to a data parser 17 that streams the received data to a hardware filter 18. The filter 18 filters the incoming data and retrieves only those transport packets 7 that are directed to the set top box STB 1 by matching the filtering information with reference information. In this example, the reference information is the MAC address of the set top box STB 1. If the filtering information and reference information match, then the transport packets 7 are stored in a RAM facility 19. The filter 17 then notifies a processor 20 of the arrival of the transport packet 7 using an interrupt signal. The processor 20 retrieves the transport packet 7 and either stores the data on a hard disk 21 or outputs the data to TV output circuitry 22 for display in real time. The output circuitry 22 includes a D/A converter and a UHF modulator to provide signals on line 23 for supply to a conventional antenna socket of the analogue TV receiver TV1. A remote controller 24 controls operation of the processor 18 via a wireless link 25, such as an infra-red link, through a transducer 26.

The set top box STB1 can be used to receive, record and feed TV broadcasts to the analogue TV receiver TV1 and the remote controller 24 is used to control channel selection for both real time display and recording on the hard disk 21. Additionally, the set top box STB1 may also run an e-mail client, such as a web browser, to receive e-mails downloaded through the DVB-T network 4, for display on the analogue TV receiver TV1.

The filter 18 automatically filters incoming data by matching all or part of its internal address, such as an IP address for receiving TCP/IP or UDP/IP packets, MAC address or a filtering address or other associated filtering information to the filtering information 14 in an incoming transport packet 11. The filtering is performed using hardware to compare the filtering field in the incoming data to reference filtering information stored in a register, e.g. the MAC address of the set top box STB1. In this manner, only those messages intended for a user of the analogue TV receiver 7 are processed, the remaining messages being discarded.

Alternatively, the filtering process may be performed using a software filter. In such an embodiment, the hardware filter 18 would be omitted, so that incoming data received on inputs 16a, 16b, 16c would be streamed by the data parser 17 directly to the processor 20. The processor 20 then compares the filtering information of the incoming transport packet to reference filtering information. In this case the reference filtering information, e.g. the MAC address for the set top box STB1, is stored in a non-volatile memory 27 associated with the processor 20. If the filtering information and reference filtering information match, the data packet is processed, either being stored on the hard disk 21 or displayed using the output circuitry 22. If there is no match, the transport packet 7 is discarded.

In this manner, where the MMS is intended for set top box STB1 only, as depicted in Figure 1, the transport packet 7 addressed to set top box STB1 will be filtered, stored and output to analogue TV receiver TV1 as required. However, the transport packet 7 will be discarded by a similar filtering process in a set top box STB2 or mobile terminal.

Figure 4 depicts an example of a suitable mobile terminal for receiving data from the DVB-T network 4 through a receiver 27. In this particular example, a software filter is used to extract transport packets intended for the mobile terminal MS3 although, in another embodiment, the mobile terminal MS3 may instead be provided with a hardware filter.

Incoming data is streamed to a controller 28 that compares the filtering information with reference information stored in a memory facility 29, such as a ROM, or in a memory module such as a SIM card (not shown).

If the filtering information and reference information match, then the transport packets 7 are stored in a RAM facility 30 or processed and output via a display 31 and/or audio output means. The audio output means may be a speaker 32 within the mobile terminal MS3 or an external device, not shown, such as a handsfree kit or headphones, connected to the mobile terminal MS3.

If the filtering information of a transport packet 7 is does not match the reference information held in memory 29, the transport packet 7 is discarded.

The operation of the controller 28 can be controlled via a user interface 33, which includes the display 31 and user input means, such as a keypad 34.

In this particular example, the mobile terminal MS3 also comprises a telephone transceiver 35 for telephone communication via PLMN 1.

The invention has been described by way of an example and is not limited to data packets encapsulated using the DSM-CC datagram section format. Where this format is used, the table_id need not be a specifically defined value relating to downloaded MMS messages. The table_id 0x3C, for "downloadDataMessage", could also be used with appropriate changes to existing standards, in terms of redefining the data structure associated with this table id. Alternatively, the table_id could be defined with a value within the range 0x40 to 0xFF. According to the datagram section format, these values are presently reserved for a user's private definitions, but one table_id value could be selected and defined for this purpose, e.g. 0x40.

As noted above, other information may be used in place of the address information for filtering purposes. While it is preferable for the filtering field to have a size of four bytes and to be located in the transport packet as described, for compatibility with DVB-MPE systems, the filtering field may be configured according to the application and the location of these fields without departing from the scope of the invention.

The payload scrambling information can be encoded in other fields of the transport packet and DSM-CC datagram section and, although it is preferable that its inclusion within the transport packet, i.e. its location and format, is not incompatible with the DSM_CC datagram section format, this is not a limitation on the scope of the invention as is shown by way of example by the second embodiment described above.

While the embodiments described above relate to transmission of data via a DVB-T network, the invention may be applied in other types of digital broadcast network, including a DVB-H (Digital Video Broadcast - Handheld) network.

## Claims

1. A method of transmitting data in a digital broadband communication network comprising:
encapsulating the data according to a first protocol to produce a data packet;
mapping the data packet onto a transport packet;
encoding filtering information in a filtering field included in the transport packet; and
repeatedly transmitting the transport packet using a data carousel mechanism.

2. A method according to claim 1, wherein the filtering information is a part or whole of an address associated with one or more data receiving devices.

3. A method according to claim 2, wherein the address is an IP or MAC address.

4. A method according to claim 1, 2, or 3, wherein the data packet is mapped onto an MPEG-2 transport packet.

5. A method according to any one of the preceding claims, wherein the data is an MMS message and is encapsulated according to the DSM-CC datagram section format with a table id within the range 0x40 to 0xFF

6. A method according to any one of the preceding claims, wherein the first protocol is a DSM-CC protocol and the location and format of the filtering information corresponds to a location and format of filtering information in a transport packet formed from the same data when encapsulated according to a second protocol, said second protocol being DVB-MPE.

7. A method according to any preceding claim, wherein the step of mapping the data packet comprises encoding scrambling information indicating a scrambling control mode of the data packet, said scrambling information being unrelated to a scrambling control mode of the transport packet.

8. A method according to claim 7, wherein the data packet contains reserved bits and the step of mapping the data packet onto the transport packet comprises replacing said reserved bits with the scrambling information.

9. A method according to claim 7, wherein the location and format of the scrambling information corresponds to a location and format of scrambling information in a transport packet formed from the same data when encapsulated according to a second protocol, said second protocol being DVB-MPE.

10. A method according to claim 8 or 9, wherein the scrambling information comprises a first bit indicating whether or not the data packet has been scrambled, wherein, if the data packet has been scrambled, the second bit indicates a scrambling control mode.

11. A computer program containing program instructions for configuring a processor to perform a method according to any one of claims 1 to 10.

12. An apparatus comprising data handling means configured to:
receive data from a source;
encapsulate the data to produce a data packet according to a protocol;
map the data packet onto a transport packet;
encode filtering information in a filtering field included in the transport packet; and
repeatedly transmit the transport packet using a DVB data carousel mechanism.

13. An apparatus according to claim 12, wherein the filtering information is a part or whole of an address associated with one or more data receiving devices.

14. An apparatus according to claim 13, wherein the address is an IP or MAC address.

15. An apparatus according to claim 12, 13 or 14, wherein the data handling means is configured to map the data packet onto an MPEG-2 transport packet.

16. An apparatus according to any one of claims 12 to 15, wherein the data is an MMS message and the data handling means is configured to encapsulate the data according to the DSM-CC datagram section format with a table id within the range 0x40 to 0xFF.

17. An apparatus according to any one of claims 12 to 16, wherein the protocol is a DSM-CC protocol and the data handling means is configured to encode the filtering information so that its location and format corresponds to a location and format of filtering information in a transport packet formed from the same data when encapsulated according to a second protocol, said second protocol being DVB-MPE.

18. An apparatus according to any one of claims 12 to 17, wherein the data handling means is further configured to encode scrambling information within the transport packet, said scrambling information indicating a scrambling control mode of the data packet unrelated to a scrambling control mode of the transport packet.

19. An apparatus according to claim 18, wherein the data packet contains reserved bits and the data handling means is configured to encode the scrambling information by replacing said reserved bits with said scrambling information when mapping the data packet onto the transport packet.

20. An apparatus according to claim 18, wherein the data handling means is configured so that the location and format of the scrambling information in the transport packet corresponds to a location and format of scrambling information in a transport packet formed from the same data when encapsulated according to a second protocol, said second protocol being DVB-MPE.

21. An apparatus according to claim 19 or 20, wherein the data handling means is configured to define the scrambling information so that a first bit indicates whether or not the data packet has been scrambled, and wherein, if the data packet has been scrambled, a second bit indicates a scrambling control mode.

22. A communication system comprising:
an apparatus according to any one of claims 12 to 21;
a DVB communication network; and
one or more receiving devices.

23. A transport packet comprising:
a header containing an identifier relating to a data carousel;
a payload comprising data to be transmitted to one or more users of one or more receiving devices; and
a filtering field containing filtering information relating to said one or more receiving devices.

24. A transport packet according to claim 23, wherein the filtering information is a part or whole of an address associated with said one or more receiving devices.

25. A transport packet according to claim 23 or 24, further comprising payload scrambling control mode information relating to a scrambling status of the payload data, said scrambling status being unrelated to a scrambling status of the transport packet.

26. A transport packet according to claim 25, wherein the payload scrambling control information comprises two bits, the first bit indicating whether or not the payload has been scrambled and, where said payload has been scrambled, the second bit indicating one of two scrambling control modes.

27. A method of transmitting data in a digital broadband communication network comprising:
encapsulating the data according to a first protocol to produce a data packet;
mapping the data packet onto a transport packet;
incorporating within the transport packet payload scrambling control mode information relating to an encryption status of the data packet mapped onto said transport packet; and
repeatedly transmitting the transport packet using a data carousel mechanism.

28. A method according to claim 27, wherein the first protocol is defined by the Digital Storage Media Command and Control standard and the data is encapsulated according to the DSM-CC datagram section format.

29. A method according to claim 28, wherein the data is an MMS message and the data packet has a table id within the range 0x40 to 0xFF.

30. A method according to claim 27, 28, or 29, wherein the step of incorporating payload scrambling control information comprises encoding the payload scrambling control information in two bits of the transport packet that correspond to reserved bits of the data packet.

31. A method according to claim 27, wherein a location of the payload scrambling control mode information in the transport packet corresponds to a location of payload scrambling control mode information in a transport packet formed from the same data when encapsulated according to a second protocol, said second protocol being DVB-MPE.

32. A method according to claim 30 or 31, wherein a first value encoded in a first bit indicates whether or not the payload has been scrambled.

33. A method according to claim 32, wherein, if the payload has been scrambled, a second value encoded a second bit indicates a scrambling control mode that has been used.

34. A method according to any one of claims 27 to 33, wherein the data packet is mapped onto an MPEG-2 transport packet.

35. A computer program containing program instructions for configuring a processor to perform the method of any one of claims 27 to 34.

36. An apparatus comprising data handling means configured to:
receive data from a source;
encapsulate the data according to a first protocol to produce a data packet;
map the data packet onto a transport packet;
incorporate within the transport packet payload scrambling control mode information relating to an encryption status of the data packet mapped onto said transport packet; and
repeatedly transmit the transport packet using a data carousel mechanism.

37. An apparatus according to claim 36, wherein the first protocol is defined by the Digital Storage Media Command and Control standard and the data is encapsulated into the DSM-CC datagram section format.

38. An apparatus according to claim 37, wherein the data is an MMS message and the data handling means is configured to encapsulate the data packet with a table id within the range 0x40 to 0xFF

39. An apparatus according to claim 36, 37 or 38, wherein the data handling means is configured to incorporate payload scrambling control information by encoding the payload scrambling control information in two bits that correspond to reserved bits of the data packet.

40. An apparatus according to claim 36, wherein a location of the payload scrambling control mode information corresponds to a location of payload scrambling control mode information in a transport packet formed from the same data when encapsulated according to a second protocol, said second protocol being DVB-MPE.

41. An apparatus according to claim 39 or 40, wherein a first value encoded in a first bit indicates whether or not the payload has been scrambled.

42. An apparatus according to claim 41, wherein, if the payload has been scrambled, a second value encoded in a second bit indicates a scrambling control modes that has been used.

43. An apparatus according to any one of claims 36 to 42, wherein the data handling means is configured to map the data packet onto an MPEG-2 transport packet.

44. A communication system comprising:
an apparatus according to any one of claims 36 to 43;
a DVB communication network; and
one or more receiving devices for receiving data transmitted by said apparatus.

45. A transport packet comprising:
a header containing an identifier relating to a digital data carousel;
a payload comprising data to be transmitted to one or more users of one or more receiving devices; and
a payload scrambling control mode field containing scrambling control mode information, said scrambling control mode information being unrelated to an encryption status of said header.

46. A transport packet according to claim 45, wherein the payload scrambling control mode field comprises two bits, a first value encoded in the first of the two bits indicating whether or not the payload has been scrambled.

47. A transport packet according to claim 46, wherein, if the payload has been scrambled, a second value encoded in the second of the two bits indicates which of two scrambling control modes has been used.
